(19) Europäisches Patentamt
European Patent Office
Office européen des brevets

(11) EP 1 739 907 B1

(12) EUROPEAN PATENT SPECIFICATION

(45) Date of publication and mention of the grant of the patent:
**07.01.2015 Bulletin 2015/02**

(51) Int Cl.:
***H04L 5/14*** *(2006.01)* ***H04L 27/00*** *(2006.01)*
***H04L 25/02*** *(2006.01)* ***H04L 27/26*** *(2006.01)*

(21) Application number: **05291403.3**

(22) Date of filing: **29.06.2005**

# (54) Digital communication method, transmitter and receiver, wherein the amount of pilot symbols is selected based on the demodulator type at the receiver side

Digitales Übertragungsverfahren, -sender und -empfänger, wobei die Anzahl von Pilotsymbolen in Abhängigkeit von der Demodulatorsorte des Empfängers ausgewählt wird

Méthode, émetteur et récepteur de communication numérique, dans lesquelles la quantité de symboles pilotes est choisie en fonction du type de demodulateur du récepteur

(84) Designated Contracting States:
**DE FR GB NL**

(43) Date of publication of application:
**03.01.2007 Bulletin 2007/01**

(73) Proprietor: **Apple Inc.**
**Cupertino, CA 95014 (US)**

(72) Inventors:
- **Ben Rached, Nidham**
**75017 Paris (FR)**
- **Lucidarme, Thierry**
**78180 Montigny-Le-Bretonneux (FR)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**EP-A- 1 158 709** **EP-A- 1 249 955**
**WO-A-2005/057870** **US-A1- 2004 128 605**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 739 907 B1

## Description

BACKGROUND OF THE INVENTION

The present invention relates to digital communications, in particular over wireless media.

We consider the transmission of a sequence of digital symbols $a_k$ over a communication channel, leading to the reception of a signal S(t) by a receiver unit:

$$S(t) = b_k * R(t) + N(t) \quad (1)$$

where R(t) is the impulse response of the channel, N(t) some additive white Gaussian noise and * designates the time convolution operation. In (1), $b_k$ represents a time discrete symbol vector, consisting of a one-dimensional vector of successive symbol values $a_k$ or of a multi-dimensional vector $b_k = (a_{k,1}, a_{k,2}, ..., a_{k,n})$ in the case of a transmission of the symbols over n sub-channels (n > 1). The channel of which R(t) is the impulse response is understood to include some processing performed at the transmitter and receiver ends depending on the transmission method employed. Such operations can comprise spectral shaping, frequency up/down conversion, channel spreading/despreading, etc.

The receiver unit estimates the symbol sequence $b_k$ that was sent based on the knowledge of S(t). This operation is called demodulation, or equalization when inter-symbol interference (ISI) is taken into account. It requires an estimation of the channel impulse response R(t), which is traditionally obtained by means of pilot symbols inserted into the sequence of transmitted symbol vectors $b_k$.

The pilot symbols, sometimes referred to as training sequences, have their values and relative time positions known *a priori* by the receiver in order to be used for the purposes of synchronization and channel probing. They do not convey user information.

In a conventional demodulator, an estimate of R(t) is first computed by means of the a *priori* known pilot symbols, typically using a minimum mean square error (MMSE) criterion applied to the segments of the received signal S(t) which correspond to the known $b_k$ values:

$$\hat{R}(t) = \min_{\{R(t)\}} \left\| S(t) - b_k * R(t) \right\|^2 \quad (2)$$

Then, this estimate R(t) is injected into another minimization criterion, e.g. MMSE, to evaluate the other, unknown symbols:

$$\hat{b}_k = \min_{\{b_k\}} \left\| S(t) - b_k * \hat{R}(t) \right\|^2 \quad (3)$$

This two-step minimization is the basis of most coherent demodulators used, for example in GSM ("Global System for Mobile communications") and UMTS ("Universal Mobile Telecommunications System") receivers. The separation between the two steps advantageously reduces the computational complexity. The counterpart is an impact on the useful bandwidth because a significant number of pilot symbols have to be sent instead of user information symbols to obtain a reliable estimation of the channel response.

The design of the signal frame structure takes this type of constraint into account. In the GSM system, signal bursts on the traffic channels have a duration of 156.25 bit periods and include training sequences of 26 pilot bits, so that the ratio of the total available bandwidth occupied by the pilot bits is $\frac{26}{156.25} = 16.64\%$. In the UMTS uplink case, this ratio is $\frac{6}{20} = 30\%$. Ratios of the order of 30% are also typical of OFDM ("Orthogonal Frequency Division Multiplexing") systems.

With the increasing performance of modern digital processing circuitry, more sophisticated approaches of the demodulation problem have been proposed.

A possibility is to carry out joint minimization to evaluate R(t) and $b_k$ simultaneously, for example with a MMSE criterion:

$$\left(\hat{b}_k, \hat{R}(t)\right) = \min_{\{b_k, R(t)\}} \left\| S(t) - b_k * R(t) \right\|^2 \quad (4)$$

This yields an optimal solution, to the expense of a lot of CPU power. In a system where all the receivers are equipped with such joint minimization demodulators, the number of pilot symbols can be strongly reduced. In the case of a "blind" demodulator, no pilot symbols are taken into account.

Other hybrid or "semi-blind" approaches exist. In such a demodulator, a first estimate R(t) of the channel impulse response is obtained based on pilot symbols, for example according to (2), and this first estimate is then refined as information symbols are estimated. The refined estimate is used to evaluate additional symbols, etc. Such a hybrid demodulator realizes a performance/complexity compromise between the two-step demodulator and the joint minimization demodulator.

Most communication systems use channel coding for forward error correction (FEC). At the transmitter end, an encoder adds redundancy symbols to the user information symbols in order to improve the robustness to channel errors. The receiver has a channel decoder downstream of the demodulator to detect and correct symbol errors. In so-called turbo-receivers, feedback information derived by the channel decoder is provided to the demodulator (channel probing and/or symbol estimation) in order to refine the minimization procedure. Such feedback can significantly improve the performance, but of course it also increases the computational complexity of the receiver. It is well suited for communication systems in which the real-time constraints are not too severe, because the channel coding usually involves an interleaving operation which requires a certain time for the decoder to make its decision.

With the development of refined demodulation schemes, some networks have or will have heterogeneous stations with different demodulation capabilities for processing the same modulated signal. Typically, cheap receivers use a two-step minimization scheme, and more sophisticated receivers incorporate more powerful CPU and suitable software to perform joint minimization, semi-blind demodulation and/or turbo-reception to obtain better performance. It is also possible to switch from one demodulation mode to another one depending on various factors such as the number of channels to be used simultaneously or the battery power level, for example. The structure of the pilot symbols has to be designed according to the simplest two-step demodulator which otherwise would not operate properly. The other demodulators have an enhanced gain. However, they can already achieve very good performance without requiring so many pilot symbols. In other words, the useful bandwidth afforded by the high performance demodulator is not fully used.

US patent application published as US2004/128605 teaches that in OFDM systems certain data symbols can be replaced by pilot symbols. More specifically this can be done when high speed Doppler effects are anticipated or detected or when the received bit error rate is high.

An object of the present invention is to provide a flexible solution to take advantage of the features of different demodulator types in a communications system.

## SUMMARY OF THE INVENTION

The invention thus proposes a digital communication method between a transmitter unit and a receiver unit over a communication channel using a predetermined modulation scheme. The method comprises the steps of:

- selecting an amount of pilot symbols depending on an indication of at least one demodulator type available in the receiver unit to operate according to the predetermined modulation scheme;
- modulating a set of digital symbols according to the predetermined modulation scheme to generate a modulated signal in the transmitter unit, the digital symbol set including information symbols and the selected amount of pilot symbols; and
- transmitting the modulated signal over the communication channel.

It is thus possible to adapt the amount of overhead required for channel estimation (pilot symbols) depending on the type of demodulation processing performed on the receiver side. Very efficient demodulation algorithm will lead to the selection of a reduced amount of pilot symbols, while a larger amount of pilot symbols will be selected in the case of a simpler, CPU-efficient demodulation algorithm.

When the step of selecting the amount of pilot symbols is carried out in the transmitter unit, the indication of at least one demodulator type is preferably received by the transmitter unit in a dedicated signaling message sent from the receiver unit. Alternatively, it is received as part of system information broadcast from the receiver unit. A dedicated signaling message indicating the selected amount of pilot symbols can be sent by the transmitter unit back to the receiver unit.

When the step of selecting the amount of pilot symbols is carried out in the receiver unit, a dedicated signaling message indicating the selected amount of pilot symbols is preferably sent from the receiver unit to the transmitter unit. Alternatively, the receiver unit belongs to a base station which broadcasts system information including the selected amount of pilot symbols.

Another aspect of the invention relates to a transmitter unit for communication with a receiver unit over a communication channel using a predetermined modulation scheme. The transmitter unit comprises:

- means for selecting an amount of pilot symbols depending on an indication of at least one demodulator type available in the receiver unit to operate according to the predetermined modulation scheme;
- means for modulating a set of digital symbols according to the predetermined modulation scheme to generate a modulated signal, the digital symbol set including information symbols and the selected amount of pilot symbols; and
- means for transmitting the modulated signal over the communication channel.

The invention also proposes a computer program product for installation in a transmitter unit and execution by a processing unit of said transmitter unit. The computer program product comprises instructions for controlling the following steps in the execution by the processing unit:

- selecting an amount of pilot symbols depending on an indication of at least one demodulator type available in a receiver unit to operate according to a predetermined modulation scheme;
- modulating a set of digital symbols for said receiver unit according to the predetermined modulation scheme to generate a modulated signal, the digital symbol set including information symbols and the selected amount of pilot symbols; and
- transmitting the modulated signal over a communication channel dedicated for said receiver unit.

Still another aspect of the invention relates to a receiver unit for communication with a transmitter unit according to the above-mentioned method. The receiver unit comprises means for sending to the transmitter unit an indication of at least one demodulator type available in the receiver unit to operate according to the predetermined modulation scheme, and a demodulator having the indicated demodulator type and adapted to operate on a received signal having an amount of pilot signal in accordance with an amount selected by the transmitter unit depending on said indication.

The invention also proposes a computer program product for installation in a unit and execution by a processing unit of said receiver unit. The computer program product comprises instructions for controlling the following steps in the execution by said processing unit:

- sending to a transmitter unit an indication of at least one demodulator type available in the receiver unit to operate according to a predetermined modulation scheme; and
- adapting a demodulator of the receiver unit having the indicated demodulator type to operate on a received signal having an amount of pilot signal in accordance with an amount selected by the transmitter unit depending on said indication.

BRIEF DESCRIPTION THE DRAWINGS

- Figure 1 is a schematic representation of wireless stations communicating in accordance with an embodiment of the invention;
- Figure 2 is a block diagram of the transmitting part of a wireless station in an embodiment of the invention;
- Figures 3-4 are block diagrams of exemplary channel processing modules in the station of figure 2;
- Figure 5 is a schematic representation of wireless stations communicating in accordance with another embodiment of the invention.

DESCRIPTION OF PREFERRED EMBODIMENTS

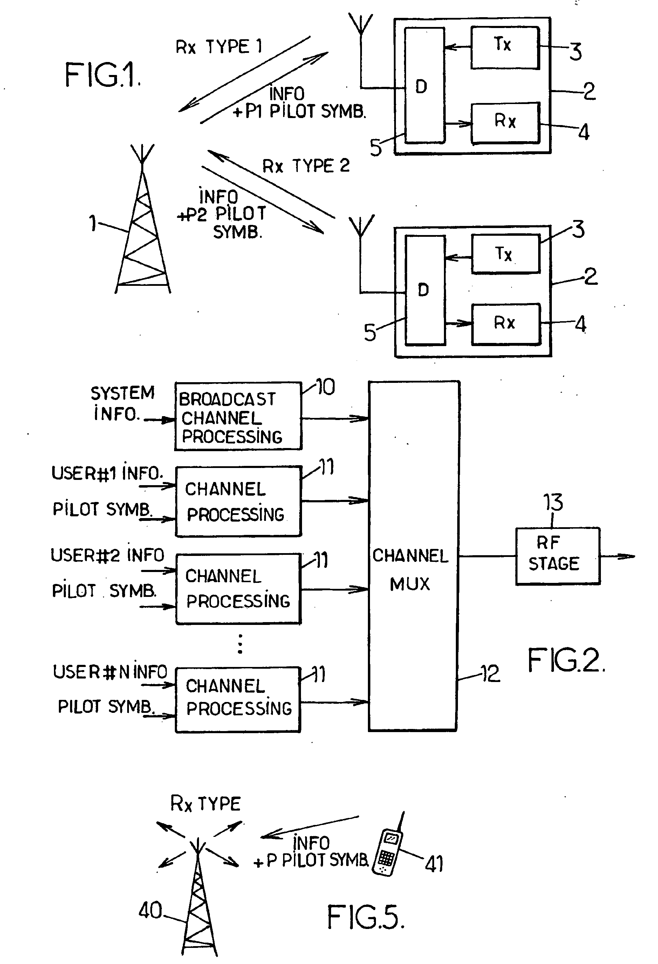

In the example illustrated in figure 1, a transmitter unit according to the invention is embodied in a base station 1 of a cellular radio network, while receiver units according to the invention are embodied in mobile stations 2.

The mobile station 2 has a transmitting part 3 and a receiving part 4 for exchanging radio signals with base stations, the uplink and downlink channels being separated by a diplexer 5.

The receiving part 4 is adapted to operate according to a given modulation scheme, for example GMSK ("Gaussian Minimum Shift Keying"), DS-CDMA ("Direct Sequence Code-Division Multiple Access"), OFDM, ..., which is used in the cellular network.

Depending on the computation available power and on the software with which it is provided, the receiving part 4 applies a certain demodulation algorithm such as one of those commented in the introduction. For example, a relatively simple mobile station will only implement demodulation with two-step minimization (hereafter referred to as Rx TYPE 1). More sophisticated mobile stations can implement a more complex demodulation algorithm (hereafter referred to as Rx TYPE 2) such as, for example, joint minimization, semi-blind demodulation or turbo reception. Of course, there can be more than two types of demodulation (Rx TYPE 3, Rx TYPE 4, ...). It is also possible to add a new type for a newly proposed demodulation algorithm.

Another possibility is that the receiving part 4 be fitted with software suitable for implementing more than one demodulation types, and that one of these types be selected for a given communication based on CPU management criteria.

In accordance with the invention, the available or selected demodulation type is indicated by the receiver unit 2, so that the transmitter unit 1 can use it to adapt the amount of pilot symbols inserted into the digital signal sent to the receiver unit 2.

In the case of figure 1, the transmitting part 3 of the mobile station uses a dedicated signaling channel resource to send a message which indicates the demodulation type (Rx TYPE 1 or Rx TYPE 2). This signaling message is typically sent during the procedure executed for establishing a dedicated downlink traffic channel. It is processed by the base station or its control equipment in order to determine the amount (P1 or P2) of pilot symbols to be used on the traffic channel.

Referring to figure 2, the transmitting part of the base station 1 has a number of channel processing modules 10, 11 for different channels multiplexed together on the radio interface. One of these modules 10 is for a broadcast channel used by the base station to broadcast system information including data useful for the mobile stations connections. In the simplified representation of figure 2, N channel processing module 11 are provided to support dedicated traffic and control channels for N users. On each traffic channel, the user information symbols are mixed with a number P of pilot symbols useable by the receivers for channel estimation. The number P = P1, P2, ... is selected on the basis of the Rx TYPE indication received from the mobile station 2.

A channel multiplexer 12 combines the signals pertaining to the broadcast, control and traffic channels in accordance with the multiple access scheme used in the cellular network. The multiple access scheme can be, depending on the network type, frequency-division multiple access (FDMA), time-division multiple access (TDMA), code-division multiple access (CDMA), multi-carrier code-division multiple access (MC-CDMA)... The combined signal output by the channel multiplexer 12 is fed to the radio stage 13 for transmission.

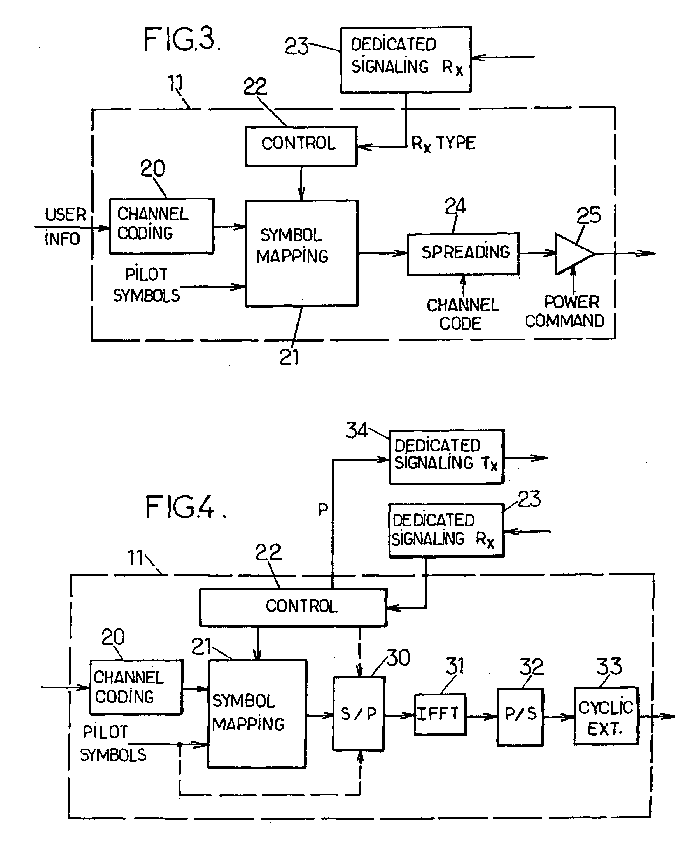

An example of channel module 11 suitable for implementing the invention in a direct sequence CDMA system is illustrated in figure 3. The symbol stream representing user information is processed by a FEC channel coder 20. The encoded symbol stream is then mapped onto signal frames in a symbol mapping module 21.

Module 21 also inserts pilot symbols into the signal frames. The amount of pilot symbols per frame is set by a control module 22 based on the Rx TYPE indication received for the recipient user. In the example considered here, the Rx TYPE indication is extracted by a module 23 which performs reception processing on a dedicating signaling channel from the mobile station.

The selection of the number P of pilot symbols per frame is for example made by the control module 22 by means of a look-up table which associates a P value with each possible value of the Rx TYPE indication.

To provide the spread spectrum modulation of the DS-CDMA scheme, the framed signal output by the symbol mapping module 21 is spread according to the spreading code allocated to the traffic channel, in a module 24. The spread spectrum signal is then amplified according to a power command determined for the traffic channel. Downstream of the channel module 11, the signal is combined with contributions from other channels, filtered and modulated according to binary phase shift keying (BPSK) or quadrature phase shift keying (QPSK) for example.

At the receiving end, the mobile station 2 performs dual operations. The demodulation, including the channel despreading is made using the algorithm that was previously indicated in the Rx TYPE indication. The dimensioning of the pilot symbol sequences optimizes the useful bandwidth for user information, considering the capacities of the demodulation algorithm.

It will be appreciated that the method according to the invention is not limited to a DS-CDMA type of modulation. Figure 4 illustrates an alternative embodiment in which the modulation uses OFDM.

In this case, the symbols output by the symbol mapping module 21 are converted from serial to parallel by a converter 30. The resulting parallel symbol values are subjected to an inverse fast Fourier transform (IFFT) in module 31. The vector produced by IFFT module 31 is converted back into a serial signal by a parallel-to-serial converter 32. A cyclic extension and windowing module 33 is then used in a conventional manner to introduce guard times between the OFDM symbols and cyclically extend the symbols into the guard times. The resulting signal is then combined with the contributions from the other channels prior to high frequency transposition.

At the receiver end, the mobile station performs the demodulation which includes a fast Fourier transform (FFT) operation to recover the transmitted signals. The position of the P pilot symbols in the resulting stream are known a *priori* for the sake of channel estimation.

As indicated with dash-dot lines in figure 4, the pilot symbols in the case of OFDM can also be inserted at the level of the serial-to-parallel operation 30. In this case, the pilot symbols can be distributed between one or more sub-carriers of the OFDM signal. For instance, if the users are allocated a given partition of contiguous sub-carriers each, the inserted pilot symbols, both in time and frequency, are dedicated and listened by only one mobile station. The selection of an appropriate time/frequency pattern for each user makes it possible to tailor the signal frame structure to fit the performances of the different receiver types.

In the example illustrated by figure 4, the number P of pilot symbols and their time/frequency pattern which have been selected by the control module 22 upon receipt of the Rx TYPE indication are supplied to a module 34 which controls the transmission on a downlink signaling channel dedicated to the mobile station. Such signaling is useful to configure the receiving part 4 of the mobile station in cases where it does not know a *priori* which number P or pattern will be selected by the base station.

In the application to cellular radio communications, the present invention is not limited to pilot symbols inserted into downlink signals. In the embodiment illustrated by figure 5, the receiver unit whose demodulation capacities are signaled by means of the Rx TYPE indication is part of the base station 1. It can occur that, in a given cellular network, different base stations use different demodulation algorithms. Here too, the signal frame structure for transmission from the mobile station can be adapted so as to select an amount of pilot symbols optimized in view of the capacities of the receiver.

The Rx TYPE indication supplied from the base station 1 can be inserted into dedicated signaling channels as in the previous case. Another possibility is to include the Rx TYPE indication into the system information broadcast over the broadcast control channel (module 10 in figure 2).

In the embodiments of the invention described above, the Rx TYPE indication is supplied by the receiver unit to the transmitter unit which processes it to select the relevant number P of pilot symbols to be used and/or their time/frequency pattern. Alternatively, the step of selecting P from Rx TYPE is carried out in the receiver unit, which signals the number P of pilot symbols which is to be used by the transmitter unit, either over a dedicated signaling channel or over a broadcast control channel.

Such a receiver end selection can be implicit in a given receiver unit, i.e. each individual receiver unit can have one demodulator type and simply signal the corresponding number of pilot symbols which should be used by the transmitter unit. In this case, the selection step of the overall process results from the fact that the signaling comes from a receiver having this particular demodulator type rather than another type.

## Claims

**1.** A digital communication method between a transmitter unit (1; 41) and a receiver unit (2; 40) over a communication channel using a predetermined modulation scheme, the method comprising the steps of:

- selecting an amount of pilot symbols depending on an indication of at least one demodulator type available in the receiver unit to operate according to the predetermined modulation scheme;
- modulating a set of digital symbols according to the predetermined modulation scheme to generate a modulated signal in the transmitter unit, the digital symbol set including information symbols and the selected amount of pilot symbols; and
- transmitting the modulated signal over the communication channel.

**2.** The method as claimed in claim 1, wherein the step of selecting the amount of pilot symbols is carried out in the transmitter unit (1; 41).

**3.** The method as claimed in claim 2, wherein the indication of at least one demodulator type is received by the transmitter unit (1; 41) in a dedicated signaling message sent from the receiver unit (2; 40).

**4.** The method as claimed in claim 2, wherein the indication of at least one demodulator type is received by the transmitter unit (41) in system information broadcast from the receiver unit (40).

**5.** The method as claimed in any one of claims 2-4, further comprising the step of sending a dedicated signaling message indicating the selected amount of pilot symbols from the transmitter unit (1; 41) to the receiver unit (2; 40).

**6.** The method as claimed in claim 1, wherein the step of selecting the amount of pilot symbols is carried out in the receiver unit (2; 40).

**7.** The method as claimed in claim 6, further comprising the step of sending a dedicated signaling message indicating the selected amount of pilot symbols from the receiver unit (2; 40) to the transmitter unit (1; 41).

**8.** The method as claimed in claim 6, wherein the receiver unit belongs to a base station (40) which broadcasts system information including the selected amount of pilot symbols.

**9.** The method as claimed in any one of the preceding claims, wherein the predetermined modulation scheme comprises orthogonal frequency division multiplexing (OFDM).

**10.** The method as claimed in claim 9, further comprising the step of selecting a time/frequency pattern for the selected amount of pilot symbols in an OFDM signal transmitted by the transmitter unit (1; 41).

**11.** The method as claimed in any one of the preceding claims, wherein the predetermined modulation scheme comprises code division multiple access (CDMA).

**12.** A transmitter unit for communication with a receiver unit (2; 40) over a communication channel using a predetermined modulation scheme, the transmitter unit (1; 41) comprising:

- means (22) for selecting an amount of pilot symbols depending on an indication of at least one demodulator type available in the receiver unit to operate according to the predetermined modulation scheme;
- means (24; 30-32) for modulating a set of digital symbols according to the predetermined modulation scheme to generate a modulated signal, the digital symbol set including information symbols and the selected amount of pilot symbols; and
- means (12-13) for transmitting the modulated signal over the communication channel.

**13.** The transmitter unit as claimed in claim 12, further comprising means (23) for receiving a dedicated signaling message containing the indication of at least one demodulator type from the receiver unit (2; 40).

**14.** The transmitter unit as claimed in claim 12, further comprising means for receiving system information broadcast by the receiver unit (40) and containing the indication of at least one demodulator type.

**15.** The transmitter unit as claimed in any one of claims 12-14, further comprising means for sending to the receiver unit (2; 40) a dedicated signaling message indicating the selected amount of pilot symbols.

**16.** The transmitter unit as claimed in any one of claims 12-15, wherein the modulated signal comprises an orthogonal frequency division multiplexing (OFDM) signal, the transmitter unit (1; 41) further comprising means for selecting a time/frequency pattern for the selected amount of pilot symbols in the OFDM signal.

**17.** A computer program product for installation in a transmitter unit (1; 41) and execution by a processing unit of said transmitter unit, the computer program product comprising instructions adapted to perform, when said computer program product is executed by the processing unit the following steps:

- selecting an amount of pilot symbols depending on an indication of at least one demodulator type available in a receiver unit (2; 40) to operate according to a predetermined modulation scheme;
- modulating a set of digital symbols for said receiver unit according to the predetermined modulation scheme to generate a modulated signal, the digital symbol set including information symbols and the selected amount of pilot symbols; and
- transmitting the modulated signal over a communication channel dedicated for said receiver unit.

18. A receiver unit for communication with a transmitter unit (1; 41) over a communication channel using a predetermined modulation scheme, the receiver unit (2; 40) comprising means (3; 10) for sending to the transmitter unit an indication of at least one demodulator type available in the receiver unit to operate according to the predetermined modulation scheme, and a demodulator (4) having the indicated demodulator type and adapted to operate on a received signal having an amount of pilot signal in accordance with an amount selected by the transmitter unit depending on said indication.

19. The receiver unit as claimed in claim 18, wherein the means (3) for sending the indication of at least one demodulator type are arranged to include said indication into a dedicated signaling message sent to the transmitter unit.

20. The receiver unit as claimed in claim 18, wherein the means (10) for sending the indication of at least one demodulator type are arranged to include said indication into system information broadcast by the receiver unit.

21. A computer program product for installation in a receiver unit (2; 40) and execution by a processing unit of said receiver unit, the computer program product comprising instructions adapted to perform, when said computer program product is executed by the processing unit the following steps:

- sending to a transmitter unit (1; 41) an indication of at least one demodulator type available in the receiver unit to operate according to a predetermined modulation scheme; and
- adapting a demodulator (4) of the receiver unit having the indicated demodulator type to operate on a received signal having an amount of pilot signal in accordance with an amount selected by the transmitter unit depending on said indication.

## Patentansprüche

1. Digitales Kommunikationsverfahren zwischen einer Transmitter-Einheit (1; 41) und einer Receiver-Einheit (2; 40) über einen Kommunikationskanal unter Verwendung eines festgelegten Modulationsschemas, das Verfahren umfassend die Schritte:

- Auswählen einer Menge von Pilotensymbolen abhängig von einem Hinweis auf zumindest einen in der Receiver-Einheit verfügbaren Demodulatortyp zum Betrieb gemäß dem festgelegten Modulationsschema;
- Modulieren eines Satzes von digitalen Symbolen gemäß dem festgelegten Modulationsschema zum Erzeugen eines modulierten Signals in der Transmitter-Einheit, wobei der Satz von digitalen Symbolen Informationssymbole und die ausgewählte Menge von Pilotensymbolen enthält; und
- Übertragen des modulierten Signals über den Kommunikationskanal.

2. Verfahren nach Anspruch 1, wobei der Schritt des Auswählens der Menge von Pilotsymbolen in der Transmitter-Einheit (1; 41) ausgeführt wird.

3. Verfahren nach Anspruch 2, wobei der Hinweis auf zumindest einen Demodulatortyp durch die Transmitter-Einheit (1; 41) in einer dedizierten Signalisierungsnachricht empfangen wird, die von der Receiver-Einheit (2; 40) gesendet wurde.

4. Verfahren nach Anspruch 2, wobei der Hinweis auf zumindest einen Demodulatortyp durch die Transmitter-Einheit (41) in System-Information empfangen wird, im Broadcast gesendet von der Receiver-Einheit (40).

5. Verfahren nach einem der Ansprüche 2-4, ferner umfassend den Schritt eines Sendens einer dedizierten Signalisierungsnachricht, die auf die ausgewählte Menge an Pilotsymbolen hinweist, von der Transmitter-Einheit (1; 41) an die Receiver-Einheit (2; 40).

6. Verfahren nach Anspruch 1, wobei der Schritt des Auswählens der Menge von Pilotsymbolen in der Receiver-Einheit (2; 40) ausgeführt wird.

7. Verfahren nach Anspruch 6, ferner umfassend den Schritt eines Sendens einer dedizierten Signalisierungsnachricht, die auf die ausgewählte Menge von Pilotsymbolen hinweist, von der Receiver-Einheit (2; 40) an die Transmitter-Einheit (1; 41).

**8.** Verfahren nach Anspruch 6, wobei die Receiver-Einheit zu einer Basisstation (40) gehört, die System-Information per Broadcast sendet, einschließlich der ausgewählten Menge an Pilotsymbolen.

**9.** Verfahren nach einem der vorstehenden Ansprüche, wobei das festgelegte Modulationsschema Orthogonal Frequency Division Multiplexing (OFDM) umfasst.

**10.** Verfahren nach Anspruch 9, ferner umfassend den Schritt eines Auswählens eines Zeit-/Frequenz-Musters für die ausgewählte Menge an Pilotsymbolen in einem durch die Transmitter-Einheit (1; 41) gesendeten OFDM-Signal.

**11.** Verfahren nach einem der vorstehenden Ansprüche, wobei das festgelegte Modulationsschema Code Division Multiple Access (CDMA) umfasst.

**12.** Transmitter-Einheit zur Kommunikation mit einer Receiver-Einheit (2; 40) über einen Kommunikationskanal unter Verwendung eines festgelegten Modulationsschemas, die Transmitter-Einheit (1; 41) umfassend:

- Mittel (22) zum Auswählen einer Menge von Pilotensymbolen abhängig von einem Hinweis auf zumindest einen in der Receiver-Einheit verfügbaren Demodulatortyp zum Betrieb gemäß dem festgelegten Modulationsschema;
- Mittel (24; 30-32) zum Modulieren eines Satzes von digitalen Symbolen gemäß dem festgelegten Modulationsschema zum Erzeugen eines modulierten Signals in der Transmitter-Einheit, wobei der Satz von digitalen Symbolen Informationssymbole und die ausgewählte Menge von Pilotensymbolen enthält; und
- Mittel (12-13) zum Übertragen des modulierten Signals über den Kommunikationskanal.

**13.** Transmitter-Einheit nach Anspruch 12, ferner umfassend Mittel (23) zum Empfangen, von der Receiver-Einheit (2; 40), einer dedizierten Signalisierungsnachricht, umfassend einen Hinweis auf zumindest einen Demodulatortyp.

**14.** Transmitter-Einheit nach Anspruch 12, ferner umfassend Mittel zum Empfangen einer den Hinweis auf zumindest einen Demodulatortyp beinhaltenden System-Information, im Broadcast gesendet von der Receiver-Einheit (40).

**15.** Transmitter-Einheit nach einem der Ansprüche 12-14, ferner umfassend Mittel zum Senden, an die Receiver-Einheit (2; 40), einer dedizierten Signalisierungsnachricht, die auf die ausgewählte Menge an Pilotsymbolen hinweist.

**16.** Transmitter-Einheit nach einem der Ansprüche 12-15, wobei das modulierte Signal ein Orthogonal Frequency Division Multiplexing-(OFDM-)Signal umfasst, und wobei die Transmitter-Einheit (1; 41) ferner Mittel umfasst zum Auswählen eines Zeit-/Frequenz-Musters für die ausgewählte Menge an Pilotsymbolen in dem OFDM-Signal.

**17.** Computerprogrammprodukt zur Installation in einer Transmitter-Einheit (1; 41) und Ausführung durch eine Verarbeitungseinheit der Transmitter-Einheit, wobei das Computerprogrammprodukt Instruktionen umfasst, die ausgestaltet sind zum Ausführen der folgenden Schritte, wenn das Computerprogrammprodukt durch die Verarbeitungseinheit ausgeführt wird:

- Auswählen einer Menge von Pilotensymbolen abhängig von einem Hinweis auf zumindest einen in der Receiver-Einheit verfügbaren Demodulatortyp zum Betrieb gemäß dem festgelegten Modulationsschema;
- Modulieren eines Satzes von digitalen Symbolen gemäß dem festgelegten Modulationsschema zum Erzeugen eines modulierten Signals in der Transmitter-Einheit, wobei der Satz von digitalen Symbolen Informationssymbole und die ausgewählte Menge von Pilotensymbolen enthält; und
- Übertragen des modulierten Signals über einen Kommunikationskanal.

**18.** Receiver-Einheit zur Kommunikation mit einer Transmitter-Einheit (1; 41) über einen Kommunikationskanal unter Verwendung eines festgelegten Modulationsschemas, wobei die Receiver-Einheit (2; 40) umfasst:

- Mittel (3; 10) zum Senden, an die Transmitter-Einheit, eines Hinweises auf zumindest einen in der Receiver-Einheit verfügbaren Demodulatortyp zum Betrieb gemäß dem festgelegten Modulationsschema, und einen Demodulator (4), aufweisend den hingewiesenen Demodulatortyp und eingerichtet zum Betrieb auf einem empfangenen Signal, das eine Menge von Pilotsignalen aufweist in Übereinstimmung mit einer Menge, die durch die Transmitter-Einheit abhängig von dem Hinweis ausgewählt wurde.

**19.** Receiver-Einheit nach Anspruch 18, wobei die Mittel (3) zum Senden des Hinweises auf zumindest einen Demodulatortyp eingerichtet sind zum Einfügen des Hinweises in eine dedizierte Signalisierungsnachricht, die an die Transmitter-Einheit gesendet wird.

**20.** Receiver-Einheit nach Anspruch 18, wobei die Mittel (10) zum Senden des Hinweises auf zumindest einen Demodulatortyp eingerichtet sind zum Einfügen des Hinweises in eine System-Information, gesendet im Broadcast durch die Receiver-Einheit.

**21.** Computerprogrammprodukt zur Installation in einer Receiver-Einheit (2; 40) und Ausführung durch eine Verarbeitungseinheit der Receiver-Einheit, wobei das Computerprogrammprodukt Instruktionen umfasst, die ausgestaltet sind zum Ausführen der folgenden Schritte, wenn das Computerprogrammprodukt durch die Verarbeitungseinheit ausgeführt wird:

- Senden, an die Transmitter-Einheit (1; 41), eines Hinweises auf zumindest einen in der Receiver-Einheit verfügbaren Demodulatortyp zum Betrieb gemäß einem festgelegten Modulationsschema; und
- Anpassen eines Demodulators (4) der Receiver-Einheit, aufweisend den hingewiesenen Demodulatortyp zum Betrieb auf einem empfangenen Signal, das eine Menge von Pilotsignalen aufweist in Übereinstimmung mit einer Menge, die durch die Transmitter-Einheit abhängig von dem Hinweis ausgewählt wurde.

## Revendications

**1.** Un procédé de communication numérique entre une unité émettrice (1 ; 41) et une unité réceptrice (2 ; 40) via un canal de communication en utilisant un schéma de modulation prédéterminé, le procédé comprenant les étapes suivantes :

- la sélection d'une quantité de symboles pilotes en fonction d'une indication d'au moins un type de démodulateur disponible dans l'unité réceptrice pour fonctionner selon le schéma de modulation prédéterminé ;
- la modulation d'un ensemble de symboles numériques selon le schéma de modulation prédéterminé pour générer un signal modulé dans l'unité émettrice, l'ensemble de symboles numériques comprenant des symboles d'information et la quantité sélectionnée de symboles pilotes; et
- l'émission du signal modulé via le canal de communication.

**2.** Le procédé de la revendication 1, dans lequel l'étape de sélection de la quantité de symboles pilotes est exécutée dans l'unité émettrice (1; 41).

**3.** Le procédé de la revendication 2, dans lequel l'indication d'au moins un type de démodulateur est reçue par l'unité émettrice (1; 41) dans un message de signalisation dédié envoyé depuis l'unité réceptrice (2 ; 40).

**4.** Le procédé de la revendication 2, dans lequel l'indication d'au moins un type de démodulateur est reçue par l'unité émettrice (41) dans une information système multidiffusée à partir de l'unité réceptrice (40).

**5.** Le procédé de l'une des revendications 2 à 4, comprenant en outre l'étape d'envoi d'un message de signalisation dédié indiquant la quantité sélectionnée de symboles pilotes depuis l'unité émettrice (1 ; 41) vers l'unité réceptrice (2 ; 40).

**6.** Le procédé de la revendication 1, dans lequel l'étape de sélection de la quantité de symboles pilotes est exécutée dans l'unité réceptrice (2 ; 40).

**7.** Le procédé de la revendication 6, comprenant en outre l'étape d'envoi d'un message de signalisation dédié indiquant la quantité sélectionnée de symboles pilotes de l'unité réceptrice (2 ; 40) vers l'unité émettrice (1 ; 41).

**8.** Le procédé de la revendication 6, dans lequel l'unité réceptrice appartient à une station de base (40) qui multidiffuse des informations système incluant la quantité sélectionnée de symboles pilotes.

**9.** Le procédé de l'une des revendications précédentes, dans lequel le schéma de modulation prédéterminé comprend un multiplexage par répartition en fréquences orthogonales (OFDM).

**10.** Le procédé de la revendication 9, comprenant en outre l'étape de sélection d'un motif temps/fréquence pour la quantité sélectionnée de symboles pilotes dans un signal OFDM émis par l'unité émettrice (1 ; 41).

**11.** Le procédé de l'une des revendications précédentes, dans lequel le schéma de modulation prédéterminé comprend un accès multiple par répartition en code (CDMA).

**12.** Une unité émettrice pour une communication avec une unité réceptrice (2 ; 40) via un canal de communication en utilisant un schéma de modulation prédéterminé, l'unité émettrice (1 ; 41) comprenant :

- des moyens (22) de sélection d'une quantité de symboles pilotes en fonction d'une indication d'au moins un type de démodulateur disponible dans l'unité réceptrice pour fonctionner selon le schéma de modulation prédéterminé ;
- des moyens (24 ; 30-32) de modulation d'un ensemble de symboles numériques selon le schéma de modulation prédéterminé pour générer un signal modulé dans l'unité émettrice, l'ensemble de symboles numériques comprenant des symboles d'information et la quantité sélectionnée de symboles pilotes ; et
- des moyens (12-13) d'émission du signal modulé via le canal de communication.

**13.** L'unité émettrice de la revendication 12, comprenant en outre des moyens (23) de réception d'un message de signalisation dédié contenant l'indication d'au moins un type de démodulateur en provenance de l'unité réceptrice (2 ; 40).

**14.** L'unité émettrice de la revendication 12, comprenant en outre des moyens de réception d'informations système multidiffusées par l'unité réceptrice (40) et contenant l'indication d'au moins un type de démodulateur.

**15.** L'unité émettrice de l'une des revendications 12 à 14, comprenant en outre des moyens d'envoi vers l'unité réceptrice (2 ; 40) d'un message de signalisation dédié indiquant la quantité sélectionnée de symboles pilotes.

**16.** L'unité émettrice de l'une des revendications 12 à 15, dans laquelle le signal modulé comprend un signal avec multiplexage par répartition en fréquences orthogonales OFDM, l'unité émettrice (1 ; 41) comprenant en outre des moyens de sélection d'un motif temps/fréquence pour la quantité sélectionnée de symboles pilotes dans le signal OFDM.

**17.** Un programme-produit informatique destiné à être installé dans une unité émettrice (1 ; 41) et exécuté par unité de traitement de ladite unité émettrice, le programme-produit informatique comprenant des instructions aptes à mettre en oeuvre, lorsque ledit programme-produit informatique est exécuté par l'unité de traitement, les étapes suivantes :

- sélection d'une quantité de symboles pilotes en fonction d'une indication d'au moins un type de démodulateur disponible dans une unité réceptrice (2 ; 40) pour fonctionner selon le schéma de modulation prédéterminé ;
- modulation d'un ensemble de symboles numériques pour ladite unité réceptrice selon le schéma de modulation prédéterminé pour générer un signal modulé, l'ensemble de symboles numériques comprenant des symboles d'information et la quantité sélectionnée de symboles pilotes ; et
- émission du signal modulé via un canal de communication dédié à ladite unité réceptrice.

**18.** Une unité réceptrice pour communication avec une unité émettrice (1 ; 41) via un canal de communication en utilisant un schéma de modulation prédéterminé, l'unité réceptrice (2 ; 40) comprenant des moyens (3 ; 10) pour l'envoi à l'unité émettrice d'une indication d'au moins un type de démodulateur disponible dans l'unité réceptrice pour fonctionner selon le schéma de modulation prédéterminé, et un démodulateur (4) possédant le type de démodulateur indiqué et apte à opérer sur un signal reçu possédant une quantité de signal pilote conformément à une quantité sélectionnée par l'unité émettrice en fonction de ladite indication.

**19.** L'unité réceptrice de la revendication 18, dans laquelle les moyens (3) d'envoi de l'indication d'au moins un type de démodulateur sont configurés pour inclure ladite indication dans un message de signalisation dédié envoyé à l'unité émettrice.

**20.** L'unité réceptrice de la revendication 18, dans laquelle les moyens (10) d'envoi de l'indication d'au moins un type de démodulateur sont configurés pour inclure ladite indication dans une information système multidiffusée par l'unité réceptrice.

**21.** Un programme-produit informatique destiné à être installé dans une unité réceptrice (2 ; 40) et à être exécuté par une unité de traitement de ladite unité réceptrice, le programme-produit informatique comprenant des instructions aptes à mettre en oeuvre, lorsque ledit programme-produit informatique est exécuté par l'unité de traitement, les étapes suivantes :

- envoi à une unité émettrice (1 ; 41) d'une indication d'au moins un type de démodulateur disponible dans l'unité réceptrice pour fonctionner selon un schéma de modulation prédéterminé ; et
- adaptation d'un démodulateur (4) de l'unité réceptrice possédant le type de démodulateur indiqué pour qu'il opère sur un signal reçu possédant une quantité de signal pilote conformément à une quantité sélectionnée par l'unité émettrice en fonction de ladite indication.

FIG.1.
Rx TYPE 1
INFO
+P1 PILOT SYMB.
Rx TYPE 2
INFO
+P2 PILOT
SYMB.
Tx
D
Rx
1
2
3
4
5
SYSTEM
INFO.
BROADCAST
CHANNEL
PROCESSING
10
USER#1 INFO.
PILOT SYMB.
CHANNEL
PROCESSING
11
USER#2 INFO
PILOT SYMB.
USER#N INFO
CHANNEL
MUX
12
13
RF
STAGE
FIG.2.
Rx TYPE
INFO
+P PILOT SYMB.
40
41
FIG.5.

FIG.3.
23
DEDICATED
SIGNALING $R_X$
11
22
CONTROL
$R_X$ TYPE
20
USER
INFO
CHANNEL
CODING
SYMBOL
MAPPING
24
SPREADING
25
PILOT
SYMBOLS
CHANNEL
CODE
POWER
COMMAND
21

34
DEDICATED
SIGNALING $T_X$
FIG.4.
P
23
DEDICATED
SIGNALING $R_X$
11
22
CONTROL
20
21
30
31
32
33
CHANNEL
CODING
SYMBOL
MAPPING
S/P
IFFT
P/S
CYCLIC
EXT.
PILOT
SYMBOLS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004128605 A